# EUROPÄISCHE PATENTSCHRIFT

(11) **EP 2 995 875 B1**
(45) Veröffentlichungstag und Bekanntmachung des Hinweises auf die Patenterteilung: **20.06.2018**
(21) Anmeldenummer: 14184468.8
(22) Anmeldetag: 11.09.2014
(51) Int. Cl.: F24F 3/16, F24F 11/00

(54) **Verfahren zum Betrieb eines Reinraums und Steuervorrichtung**
Method for operating a clean-room and control device
Procédé de fonctionnement d'une salle blanche et dispositif de commande

(43) Veröffentlichungstag der Anmeldung: 16.03.2016
(73) Patentinhaber: Weiss Klimatechnik GmbH, 35447 Reiskirchen-Lindenstruth (DE)
(72) Erfinder:
(74) Vertreter: advotec.

(56) Entgegenhaltungen:
- DE-A1-102012 020 202
- DE-A1-102013 202 978
- DE-B3-102008 057 787
- US-A1- 2011 264 274

## Beschreibung

Die Erfindung betrifft ein Verfahren zum Betrieb eines Reinraums sowie eine Steuervorrichtung für einen Reinraum, wobei der Reinraum einen Arbeitsraum, eine raumlufttechnische Anlage und eine Steuervorrichtung umfasst, wobei mittels der Steuervorrichtung die raumlufttechnische Anlage gesteuert und/oder geregelt wird, wobei mittels der raumlufttechnischen Anlage eine Luftwechselrate in dem Arbeitsraum und eine Druckdifferenz zwischen dem Arbeitsraum und einer Umgebung ausgebildet wird, wobei die Steuervorrichtung zumindest eine Sensoreinrichtung zur Erfassung eines einen Betriebsparameter repräsentierenden Ist-Wertes umfasst.
Derartige Verfahren bzw. Steuervorrichtungen für Reinräume werden regelmäßig zur Steuerung bzw. Regelung raumlufttechnischer Anlagen eingesetzt. Mit einer raumlufttechnischen Anlage wird einem Raum Zuluft zugeführt bzw. Abluft abgeführt, wobei beispielsweise eine Lufttemperatur oder auch eine relative Feuchte mittels entsprechender Sensoren in dem Raum überwacht wird. Eine Veränderung der Lufttemperatur bewirkt dann eine Regelung der raumlufttechnischen Anlage über eine Steuervorrichtung derart, dass die Zuluft des Raumes gekühlt oder erwärmt wird, so dass die gewünschte Lufttemperatur erhalten bzw. erreicht wird.

Bei einem Reinraum ist es darüber hinaus vorgesehen, in einem in sich geschlossen, begehbaren Arbeitsraum oder einer Arbeitskabine eine besonders saubere Luftatmosphäre auszubilden, um beispielsweise eine Kontamination von Laborproben oder mikroelektronischen Bauteilen mit Keimen, Mikroorganismen oder Staubpartikeln zu verhindern. Dazu wird mittels einer raumlufttechnischen Anlage in dem Arbeitsraum eine Partikelkonzentration ausgebildet, die gegenüber einer Umgebung des Arbeitsraums wesentlich vermindert ist. Auch wird eine permanente Druckdifferenz zwischen dem Arbeitsraum und der Umgebung ausgebildet, um beispielsweise ein Eindringen von Partikeln in den Arbeitsraum oder auch einen Austritt aus dem Arbeitsraum zu verhindern. Weiter ist es erforderlich, dass Personen zur Ausführung von Arbeitstätigkeiten den Arbeitsraum betreten. Trotz einer angepassten Arbeitskleidung und gegebenenfalls speziellen Arbeitsmitteln stellen diese Personen regelmäßig jeweils die größte Quelle für Partikel und andere Verschmutzungen dar.

Neben einer geeigneten Luftführung im Arbeitsraum, die Verschmutzungen von einem Arbeitsplatz wegführen soll, wird die dem Arbeitsraum zugeführte Luft mehrfach gefiltert und dem Arbeitsraum stetig zugeführt um eine Partikelkonzentration unterhalb eines Grenzwertes zu halten. Dieser Grenzwert ergibt sich aufgrund einer Klassifizierung einer Reinheit des Arbeitsraumes nach einer Norm wie beispielsweise ISO 14644-1. Um die erforderliche Druckdifferenz und die Partikelkonzentration im Arbeitsraum jederzeit sicherzustellen, wird die raumlufttechnische Anlage permanent betrieben, das heißt auch wenn im Arbeitsraum keinerlei Arbeitstätigkeiten ausgeführt werden, oder sich Personen in diesem befinden. Eine Luftwechselrate wird dabei so gewählt, dass der Arbeitsraum von einer Anzahl Personen betreten werden kann, was zu einem starken Anstieg einer Partikelkonzentration führt, ohne dass eine zulässige Partikelkonzentration für die betreffende Reinraumklasse überschritten wird. Gegebenenfalls kann auch an einem Zugang zu dem Arbeitsraum eine Lichtzeicheneinrichtung bzw. Ampel angeordnet sein, die in Abhängigkeit einer Partikelkonzentration einen Zugang bzw. eine Freigabe einer Produktion oder einen Produktionsstopp regelt. Die DE 10 2008 057 787 B3 offenbart ein Verfahren nach dem Oberbegriff von Anspruch 1 sowie eine Steuervorrichtung nach dem Oberbegriff von Anspruch 14.

Die US 2011 0264274 A1 offenbart eine raumlufttechnische Anlage wobei die Luftwechselrate in Abhängigkeit der Belegung des Gebäudes geregelt wird.

Ein Sicherstellen einer ausreichend niedrigen Partikelkonzentration erfordert daher eine entsprechend hohe Luftwechselrate. Dabei wird die Partikelkonzentration im Wesentlichen durch eine Drehzahl von in Einsatz befindlichen Lüftern der raumlufttechnischen Anlage bestimmt. Da diese Lüfter im Dauerbetrieb laufen bzw. permanent im Einsatz sind, hat dies vergleichsweise hohe Energiekosten und damit Betriebskosten für den Reinraum zur Folge.
Der vorliegenden Erfindung liegt daher die Aufgabe zugrunde, ein Verfahren zum Betrieb eines Reinraums sowie eine Steuervorrichtung vorzuschlagen, mit dem bzw. der die Betriebskosten eines Reinraums gesenkt werden können.
Diese Aufgabe wird durch ein Verfahren mit den Merkmalen des Anspruchs 1, eine Steuervorrichtung mit den Merkmalen des Anspruchs 14 und einen Reinraum mit den Merkmalen des Anspruchs 15 gelöst.
Bei dem erfindungsgemäßen Verfahren zum Betrieb eines Reinraums umfasst der Reinraum einen Arbeitsraum, eine raumlufttechnische Anlage und eine Steuervorrichtung, wobei mittels der Steuervorrichtung die raumlufttechnische Anlage gesteuert und/oder geregelt wird, wobei mittels der raumlufttechnischen Anlage eine Luftwechselrate in dem Arbeitsraum und eine Druckdifferenz zwischen dem Arbeitsraum und einer Umgebung ausgebildet wird, wobei die Steuervorrichtung zumindest eine Sensoreinrichtung zur Erfassung eines einen Betriebsparameter repräsentierenden Ist-Wertes umfasst, wobei mittels der Steuervorrichtung die Luftwechselrate derart angepasst wird, dass der Ist-Wert im Bereich eines Soll-Wertes liegt.

Mit dem erfindungsgemäßen Verfahren wird sichergestellt, dass in dem begehbaren Arbeitsraum eine gegenüber einer Umgebung des Arbeitsraums verminderte Partikelkonzentration zu jeder Zeit des Betriebs des Reinraums zur Verfügung steht. Gleichwohl wird permanent in dem Arbeitsraum eine Luftwechselrate zur Verfügung gestellt, die einen Minimalwert nicht unterschreitet, wobei gleichzeitig auch die Druckdifferenz permanent aufrecht erhalten wird. Dabei ist es zunächst unerheblich, ob es sich um einen Überdruck bzw. Unterdruck in dem Arbeitsraum relativ zu einer Umgebung des Arbeitsraums handelt. Mittels der Sensoreinrichtung wird während des Dauerbetriebs des Reinraums zumindest ein Betriebsparameter des Arbeitsraums erfasst. Dabei ist es unerheblich, wie der Betriebsparameter erfasst oder auch gemessen wird. Wesentlich ist, dass ein Ist-Wert des Arbeitsraums erfasst wird, wobei dies auch außerhalb des Arbeitsraums, beispielsweise in oder an der raumlufttechnischen Anlage erfolgen kann. Der von der Sensoreinrichtung erfasste Ist-Wert des Betriebsparameters wird von der Steuervorrichtung verarbeitet und dazu genutzt die Luftwechselrate derart anzupassen, dass der Ist-Wert im Bereich eines Soll-Wertes des Betriebsparameters liegt.

Durch die Verknüpfung der Luftwechselrate mit dem erfassten Ist-Wert, der nach einem Soll-Wert geregelt wird, wird es möglich, die Luftwechselrate in den Betriebszeiträumen abzusenken, in denen der Arbeitsraum überhaupt nicht oder von nur wenigen Personen betreten wird. Bei der Erfassung des Ist-Wertes ist wesentlich, dass dieser durch eine Änderung der Luftwechselrate beeinflusst werden kann. In Betriebszeiträumen, in denen der Arbeitsraum von einer Anzahl von Personen betreten und benutzt wird, wird der betreffende Ist-Wert bzw. Betriebsparameter dahingehend beeinflusst, dass die Steuervorrichtung eine vergleichsweise höhere Luftwechselrate initiiert, um den Ist-Wert im Bereich des Soll-Wertes zu halten bzw. entsprechend zu regeln. Durch die an eine Nutzung des Arbeitsraums derart angepasste Luftwechselrate kann folglich eine Lüfterdrehzahl der raumlufttechnischen Anlage in Betriebszeiträumen ohne bzw. mit geringer Aktivität im Arbeitsraum gesenkt werden. Dies führt folglich dazu, dass in diesen Betriebszeiträumen Energie eingespart werden kann und damit Betriebskosten gemindert werden können.
Bei dem Verfahren kann insbesondere vorgesehen sein, dass als eine Druckdifferenz ein permanenter bzw. dauerhafter Überdruck in dem Arbeitsraum während der gesamten Betriebsdauer ausgebildet wird. So kann vermieden werden, dass Partikel ohne Weiteres in den Arbeitsraum gelangen können, da durch den Überdruck eine stetige Luftströmung, welche aus dem Arbeitsraum herausführt, ausgebildet wird. Gleichwohl ist es möglich, in dem Arbeitsraum auch einen Unterdruck auszubilden, wenn ein Austritt von beispielsweise Keimen oder Mikroorganismen aus dem Arbeitsraum verhindert werden soll.
Vorteilhaft kann mittels der Sensoreinrichtung die Druckdifferenz und ein eine Luftqualität im Arbeitsraum und/oder einen Betriebsparameter bzw. Betriebszustand des Arbeitsraums repräsentierender Ist-Wert erfasst werden. Die Sensoreinrichtung kann dann gleichzeitig die Druckdifferenz und den Ist-Wert erfassen. Der Ist-Wert kann unmittelbar eine Luftqualität im Arbeitsraum repräsentieren oder auch einen Betriebsparameter bzw. -zustand der mit der Luftqualität in einem kausalen Zusammenhang steht. Dabei ist es auch möglich, dass die Sensoreinrichtung mit beispielsweise verschiedenen Sensoren unterschiedliche Ist-Werte erfasst. Die Erfassung kann vorzugsweise periodisch oder kontinuierlich erfolgen, so dass die Steuervorrichtung unmittelbar auf sich verändernde Ist-Werte mit einer Anpassung der Luftwechselrate reagieren kann. Erfindungsgemäß wird mittels der Sensoreinreichtung ein Ist-Wert für die Partikelkonzentration erfasst. Zusätzlich kann mittels der Sensoreinrichtung ein Ist-Wert für Partikelanzahl, Lufttemperatur, relative Luftfeuchte, Luftwechselrate, Luftdruck, Bewegungsintensität, Personenanzahl, CO₂-Konzentration und/oder Türöffnungen erfasst werden. Erfindungsgemäß wird der Ist-Wert einer Partikelkonzentration für eine Regelung der Luftwechselrate genutzt, da die Partikelkonzentration stark vermindert ist, wenn sich keine Personen in dem Arbeitsraum befinden. Ein Ist-Wert der Partikelkonzentration kann auch über eine Variation der Luftwechselrate an einen Soll-Wert leicht angepasst werden. Gleiches gilt für eine Lufttemperatur, wobei die Lufttemperatur im Arbeitsraum durch einen Einsatz von Maschinen oder auch im Arbeitsraum befindlichen Personen erhöht wird. So ist es gegebenenfalls bereits möglich, die Lufttemperatur durch eine Erhöhung der Luftwechselrate anzupassen, ohne dass eine energieintensive Kühlung einer Zuluft erforderlich wäre. Ebenso kann eine relative Luftfeuchte leicht angepasst werden. Auch kann die Luftwechselrate selbst wie der Luftdruck bzw. die Druckdifferenz erfasst werden, um sicherzustellen, dass diese Betriebsparameter nicht unter einen mindestens erforderlichen Soll-Wert fallen. Darüber hinaus kann beispielsweise durch einen Bewegungsmelder bzw. Sensor eine Bewegungsintensität oder eine Personenanzahl im Arbeitsraum erfasst werden, wobei diese Betriebsparameter ebenfalls zur Anpassung der Luftwechselrate genutzt werden können, da mit erhöhter Bewegungsintensität oder Personenzahl eine Erhöhung der Partikelkonzentration und der Lufttemperatur sowie der relativen Luftfeuchte einhergeht bzw. zu erwarten ist. Weiter ist es möglich, die Personenanzahl über eine Messung der CO₂-Konzentration im Arbeitsraum oder einer Abluft oder über eine Überwachung einer Türöffnung des Arbeitsraums zu erfassen und die Luftwechselrate entsprechend anzupassen.
Vorzugsweise kann die Partikelkonzentration an einem Arbeitsplatz im Arbeitsraum oder in einer Abluft der raumlufttechnischen Anlage gemessen werden. Insbesondere an dem Arbeitsplatz kann die Partikelkonzentration unmittelbar am dafür wesentlichen Arbeitsort erfasst werden, wobei mit einer Messung der Abluft eine Partikelkonzentration für den gesamten Arbeitsraum erfasst werden kann. So ist es auch möglich, an unterschiedlichen Orten jeweils eine Partikelkonzentration zu messen, um ein Überschreiten eines Grenzwertes sicher auszuschließen. Erfindungsgemäß erfolgt eine Anpassung eines Energieverbrauchs des Reinraums an die betrieblichen Gegenbenheiten dadurch, dass die Steuervorrichtung in Abhängigkeit einer Zeitsteuerung und/oder einer Bewegungsintensität im Arbeitsraum einen Soll-Wert auswählt, wobei als Soll-Wert ein Soll-Aktivitätswert für einen Betriebszeitraum oder einen Soll-Inaktivitätswert für einen Ruhezeitraum ausgewählt wird. Wird beispielsweise ein Reinraum in einem Zweischichtbetrieb betrieben, kann innerhalb des Ruhezeitraums ein Soll-Inaktivitätswert ausgewählt bzw. festgelegt werden, der beispielsweise eine vergleichsweise hohe Partikelkonzentration im Arbeitsraum erlaubt, die so hoch ist, dass der Arbeitsraum während des Ruhezeitraums nicht von Personen betreten werden kann. Erfindungsgemäß wird daher in dem Ruhezeitraum gegenüber dem Betriebszeitraum eine Partikelkonzentration erhöht. Vorzugsweise kann in dem Ruhezeitraum gegenüber dem Betriebszeitraum auch eine Temperatur und/oder eine relative Luftfeuchte erhöht oder auch die Temperatur und/oder die relative Luftfeuchte abgesenkt werden, je nachdem welche diesbezüglichen Umgebungsbedingungen vorherrschen, zum Beispiel Sommer oder Winter. Beispielsweise kann in dem Betriebszeitraum eine Lufttemperatur von 20 bis 22°C bei 40 bis 50% relativer Luftfeuchte und in dem Ruhezeitraum eine Lufttemperatur von 8 bis 25°C bei 25 bis 60% relativer Luftfeuchte vorgesehen sein. Somit kann dann eine Luftwechselrate wesentlich gemindert werden. In dem Betriebszeitraum bzw. innerhalb der zwei Schichten kann dann der Soll-Aktivitätswert gewählt bzw. bestimmt werden, der zu einer Partikelkonzentration im Arbeitsraum führt, die einen Zutritt von Personen erlaubt. Auch ist es möglich, alleine oder zusätzlich eine Bewegungsintensität im Arbeitsraum zu erfassen und nach einem Grad der Bewegungsintensität den Soll-Aktivitätswert bzw. den Soll-Inaktivitätswert festzulegen. Somit kann die Luftwechselrate und damit ein Energieverbrauch noch besser an die Betriebserfordernisse des Reinraums angepasst werden. Gleichwohl ist es möglich, die Soll-Werte für einen oder mehrere der vorgenannten Betriebsparameter auf Basis von Ist-Werten auszuwählen bzw. festzulegen.
In einer Ausführungsform des Verfahrens kann eine Regelung der Druckdifferenz von einer Regelung der Luftwechselrate überlagert werden. Die Druckdifferenz kann dann eine vorrangige und die Luftwechselrate eine nachrangige Regelgröße sein. So kann dann zumindest zu jedem Zeitpunkt des Betriebs des Reinraums sichergestellt werden, dass eine Druckdifferenz zwischen dem Arbeitsraum und der Umgebung des Arbeitsraums ausgebildet wird. Dabei kann beispielsweise eine minimale Druckdifferenz festgelegt werden.
Vorteilhaft weist die raumlufttechnische Anlage einen ersten Lüfter für Zuluft und einen zweiten Lüfter für Abluft auf, wobei die Steuervorrichtung dann die Druckdifferenz durch eine Anpassung von Drehzahlen der jeweiligen Lüfter regeln kann. Auch kann vorgesehen sein, dass eine Filtereinrichtung beispielsweise zwischen dem ersten Lüfter und dem Arbeitsraum in einem Zuluftkanal angeordnet ist, so dass dem Arbeitsraum stets gefilterte Zuluft mit einer geringen Partikelkonzentration zugeführt werden kann. Die Filtereinrichtung kann ihrerseits mehrstufig ausgebildet sein und eine Anzahl unterschiedlicher Filter umfassen. Dadurch, dass zumindest die Drehzahl des einen Lüfters von der Drehzahl des anderen Lüfters abhängig geregelt wird, kann stets eine Drehzahldifferenz zwischen den Lüftern aufrechterhalten werden, die ihrerseits die Druckdifferenz bewirkt.
Weiter kann die Steuervorrichtung eine Drehzahl des ersten Lüfters in Abhängigkeit der Partikelkonzentration und vorzugsweise zusätzlich in Abhängigkeit einer Lufttemperatur regeln. Fällt dann beispielsweise eine Partikelkonzentration unter einen Soll-Wert kann die Luftwechselrate und damit die Drehzahl des ersten Lüfters vermindert werden. Zur Aufrechterhaltung der permanenten Druckdifferenz kann dann die Drehzahl des zweiten Lüfters nachgeregelt werden.

Ebenso kann die Sensoreinrichtung eine Lufttemperatur der Zuluft und eine Lufttemperatur der Abluft erfassen, wobei die Steuervorrichtung dann eine Drehzahl des ersten Lüfters und/oder eine Behandlung der Zuluft in Abhängigkeit der Lufttemperatur der Abluft regeln kann. So ist es möglich, auch in Abhängigkeit einer Lufttemperatur im Arbeitsraum bzw. einer Temperaturdifferenz zwischen Lufttemperatur der Zuluft und Lufttemperatur der Abluft eine Drehzahl des ersten Lüfters zu regeln und diese eventuell zu verringern. Wahlweise oder auch ergänzend kann eine Behandlung der Zuluft in Abhängigkeit der Lufttemperatur dadurch erfolgen, dass eine Erhitzung oder Kühlung der Zuluft mittels eines Erhitzers oder Kühlers der raumlufttechnischen Anlage erfolgt. Auch kann die Steuervorrichtung je nach dem zu erwartenden Energieverbrauch zwischen einer Anpassung der Drehzahl des ersten Lüfters und einer Behandlung der Zuluft auswählen. Die vorbeschriebene Regelung nach der Lufttemperatur kann die Regelung nach der Partikelkonzentration überlagern, so dass die Regelung nach der Partikelkonzentration vorrangig gegenüber der Regelung nach der Lufttemperatur erfolgen kann.

Die Steuervorrichtung kann eine Drehzahl des zweiten Lüfters in Abhängigkeit der Druckdifferenz, vorzugsweise eines Luftdrucks im Arbeitsraum und einer Drehzahl des ersten Lüfters regeln. So kann die Drehzahl des zweiten Lüfters nicht nur an die Drehzahl des ersten Lüfters angepasst sein, sondern es kann auch bei der Regelung der Drehzahl des zweiten Lüfters die Druckdifferenz zwischen Arbeitsraum und der Umgebung berücksichtigt werden. So kann in jedem Fall eine Aufrechterhaltung einer kontinuierlichen Druckdifferenz sichergestellt werden.

Eine noch bessere Anpassung an betriebliche Gegebenheiten wird möglich, wenn die Steuervorrichtung über einen Betriebszeitraum erfasste Betriebsparameter speichern kann, und aus den gespeicherten Betriebsparametern regelmäßig wiederkehrende Abfolgen von Betriebszuständen von der Steuervorrichtung abgeleitet werden können, wobei die Steuervorrichtung dann eine Anpassung der Luftwechselrate auf einen zukünftig zu erwartenden Betriebszustand vornehmen kann. Beispielsweise kann die Steuervorrichtung dann regelmäßig wiederkehrende Arbeitstätigkeiten erkennen, die zu einer erhöhten Partikelkonzentration im Arbeitsraum führen. Die Steuervorrichtung kann dann in Erwartung einer derartigen Situation die Luftwechselrate erhöhen, bevor die Partikelkonzentration ansteigt bzw. die Partikelkonzentration vorsorglich absenken. So kann vermieden werden, dass beispielsweise ein Zugang zu dem Arbeitsraum für Personen nur sukzessive möglich ist, da aufgrund der Regelung der Luftwechselrate nach der Partikelkonzentration gegebenenfalls erst eine Erhöhung der Luftwechselrate regelungsbedingt abgewartet werden muss. Das Verfahren ermöglicht somit eine noch bessere Anpassung an betriebliche Gegebenheiten, ohne dass Einschränkungen bei einer Nutzung des Reinraums in Kauf zu nehmen wären.

Bei der erfindungsgemäßen Steuervorrichtung für einen Reinraum umfasst der Reinraum einen Arbeitsraum und eine raumlufttechnische Anlage, wobei mittels der Steuervorrichtung die raumlufttechnische Anlage steuerbar und/oder regelbar ist, wobei mittels der raumlufttechnischen Anlage eine Luftwechselrate in dem Arbeitsraum und eine Druckdifferenz zwischen dem Arbeitsraum und einer Umgebung ausbildbar ist, wobei die Steuervorrichtung zumindest eine Sensoreinrichtung zur Erfassung eines einen Betriebsparameter repräsentierenden Ist-Wertes umfasst, wobei mittels der Steuervorrichtung die Luftwechselrate derart anpassbar ist, dass der Ist-Wert im Bereich eines Soll-Wertes liegt. Die Steuervorrichtung kann insbesondere als eine Einrichtung zur Datenverarbeitung ausgebildet sein.

Hinsichtlich der Vorteile der erfindungsgemäßen Steuervorrichtung wird auf die Vorteilsbeschreibung des erfindungsgemäßen Verfahrens verwiesen. Weitere vorteilhafte Ausführungsformen der Steuervorrichtung ergeben sich aus den Merkmalsbeschreibungen der auf den Verfahrensanspruch 1 rückbezogenen Unteransprüche.

Der erfindungsgemäße Reinraum umfasst einen Arbeitsraum, eine raumlufttechnische Anlage und eine erfindungsgemäße Steuervorrichtung.

In einer Ausführungsform kann der Reinraum eine Mehrzahl von miteinander verbundenen Arbeitsräumen mit unterschiedlichen Druckdifferenzen umfassen. Die Arbeitsräume können so miteinander verbunden sein, dass ein Zugang zu einem Arbeitsraum mit einer größten Druckdifferenz nur über Arbeitsräume mit jeweils kleineren Druckdifferenzen möglich ist. Das erfindungsgemäße Verfahren bzw. die erfindungsgemäße Steuervorrichtung kann jeweils für einen dieser Arbeitsräume alleine oder auch für alle Arbeitsräume des Reinraums eingesetzt werden, wobei dann die jeweils unterschiedlichen Druckdifferenzen und andere sich zwischen den Arbeitsräumen jeweils unterscheidende Betriebsparameter durch eine individuelle Anpassung einer Luftwechselrate in den jeweiligen Arbeitsräumen berücksichtigt werden können.

Nachfolgend wird eine bevorzugte Ausführungsform der Erfindung unter Bezugnahme auf die beigefügten Zeichnungen näher erläutert.

Es zeigen:
- **Fig. 1**: eine schematische Darstellung eines Reinraums mittels eines Blockdiagramms;
- **Fig. 2**: eine Funktionsdiagramm eines Reinraums;
- **Fig. 3**: ein Regeldiagramm eines ersten Reglers des Reinraums aus **Fig. 2****;**
- **Fig. 4**: ein Regeldiagramm eines zweiten Reglers des Reinraums aus **Fig. 2****;**
- **Fig. 5**: ein Regeldiagramm eines dritten Reglers des Reinraums aus **Fig. 2****;**
- **Fig. 6**: ein Regeldiagramm eines vierten Reglers des Reinraums aus **Fig. 2****;**
- **Fig. 7**: ein Regeldiagramm eines fünften Reglers des Reinraums aus **Fig. 2****;**
- **Fig. 8**: ein Regeldiagramm eines sechsten Reglers des Reinraums aus **Fig. 2****;**
- **Fig. 9**: ein Regeldiagramm eines siebten Reglers des Reinraums aus **Fig. 2****.**

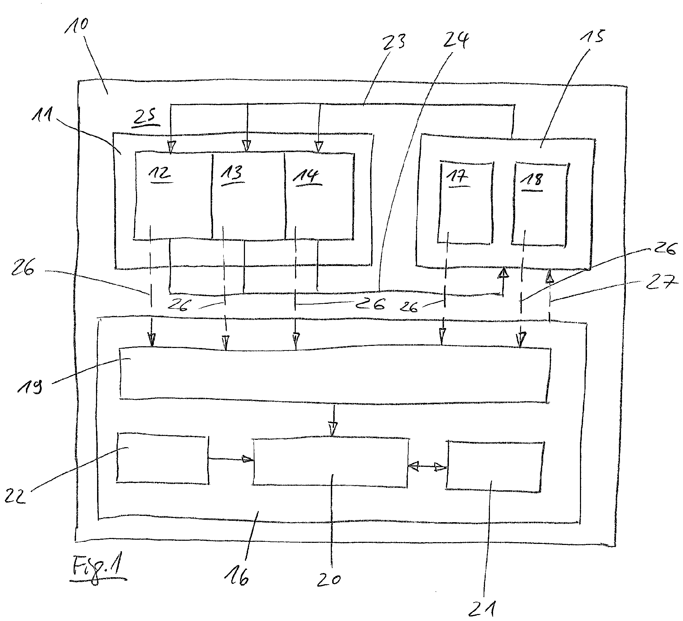

Die **Fig. 1** zeigt eine schematische Darstellung eines Reinraums 10, wobei der Reinraum 10 eine Arbeitsraumanordnung 11 mit einer Mehrzahl von untereinander verbundenen und begehbaren Arbeitsräumen 12, 13 und 14, eine raumlufttechnische Anlage 15, und eine Steuervorrichtung 16 umfasst. Die raumlufttechnische Anlage 15 weist ihrerseits eine Ventilatoreinrichtung 17 und eine Behandlungseinrichtung 18 auf. Die Ventilatoreinrichtung 17 ist aus einem hier nicht näher dargestellten Zuluftlüfter und einem Abluftlüfter ausgebildet, wobei die Behandlungseinrichtung 18 einen ebenfalls nicht dargestellten Erhitzer, Kühler und/oder Be- bzw. Entfeuchter aufweist. Die Steuervorrichtung 16 weist eine Sensoreinrichtung 19, eine Verarbeitungseinrichtung 20, eine Speichereinrichtung 21 und eine Zeitsteuereinrichtung 22 auf.

Die Arbeitsräume 12, 13 und 14 werden über einen Zuluftkanal 23 und einen Abluftkanal 24 von der raumlufttechnischen Anlage 15 mit behandelter und gefilterter Luft versorgt, wobei in den Arbeitsräumen 12, 13 und 14 eine Druckdifferenz gegenüber einer Umgebung 25 bei einem stetigen Luftwechsel ausgebildet wird. Die Sensoreinrichtung 19 erhält über jeweils eine Signalleitung 26 einen Ist-Wert eines Betriebsparameters aus den Arbeitsräumen 12, 13 und 14 sowie der Ventilatoreinrichtung 17 und der Behandlungseinrichtung 18. Die jeweiligen Ist-Werte der Betriebsparameter werden an die Verarbeitungseinrichtung 20 übergeben, wobei die Verarbeitungseinrichtung 20 die Ist-Werte in der Speichereinrichtung 21 speichert und gleichzeitig auf dort gespeicherte Soll-Werte zurückgreift. Die Zeitsteuereinrichtung 22 initiiert dabei einen Zugriff auf Soll-Werte unter Berücksichtigung eines Betriebszeitraumes. Die Verarbeitungseinrichtung 20 errechnet eine Anpassung der Luftwechselrate in den Arbeitsräumen 12, 13 und 14 auf Basis der ermittelten Ist-Werte und ausgewählten Soll-Werte, so dass die Steuervorrichtung über eine Signalleitung 27 die raumlufttechnische Anlage 15 mit Steuersignalen versorgt, die eine Anpassung der betreffenden Luftwechselrate derart bewirkt, dass die Ist-Werte in den jeweiligen Bereichen der Soll-Werte liegen bzw. mit diesen im Wesentlichen übereinstimmen. Insbesondere dadurch, dass diese Regelung über die Luftwechselrate ausgeführt wird, kann ein Energieverbrauch der Ventilatoreinrichtung 17 und der Behandlungseinrichtung 18 wesentlich gesenkt und damit ein kostengünstigerer Betrieb des Reinraums 10 erzielt werden.

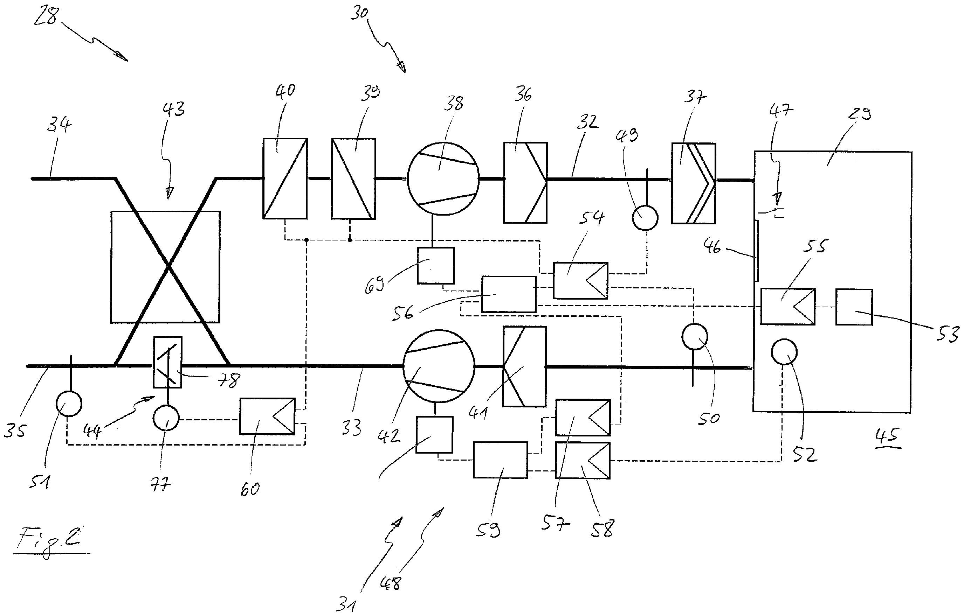

Die **Fig. 2** zeigt ein Funktionsdiagramm eines Reinraums 28 mit einem Arbeitsraum 29, einer raumlufttechnischen Anlage 30 und einer Steuervorrichtung 16. Die raumlufttechnische Anlage 30 umfasst einen Zuluftkanal 32 und einen Abluftkanal 33 mit einem Fortluftstutzen 34 bzw. einem Frischluftstutzen 35. In dem Zuluftkanal ist ein erster Filter 36 und ein zweiter Filter 37 angeordnet. Dem vorgeschaltet ist ein erster Lüfter 38 für Zuluft sowie ein Kühler 39 und ein Erhitzer 40. In dem Abluftkanal 33 ist ein dritter Filter 41 sowie ein zweiter Lüfter 42 für die Abluft angeordnet. Der Zuluftkanal 32 und der Abluftkanal 33 sind an eine Wärmerückgewinnungseinheit 43 mit einem Bypass 44 angeschlossen. Der erste Lüfter 38 und der zweite Lüfter 42 werden stetig betrieben, so dass in dem Arbeitsraum 29 eine Druckdifferenz bzw. ein Überdruck gegenüber einer Umgebung 45 sowie eine Luftwechselrate ausgebildet wird. Der Arbeitsraum 29 verfügt über einen verschließbaren Zugang 46 mit einem Öffnungssensor 47. Personen können den Arbeitsraum 29 über den Zugang 46 betreten oder verlassen und innerhalb des Arbeitsraums 29 mit einer gegenüber der Umgebung 45 verminderten Partikelkonzentration eine Arbeitstätigkeit ausführen. Eine im Raum befindliche Personenanzahl kann beispielsweise über den Öffnungssensor 47 ermittelt werden.

Eine Sensoreinrichtung 48 der Steuervorrichtung 31 umfasst einen ersten Lufttemperatursensor 49 im Zuluftkanal 32, einen zweiten Lufttemperatursensor 50 im Abluftkanal 33, einen dritten Lufttemperatursensor im Frischluftstutzen 35 sowie einen Luftdifferenzdrucksensor 52 und einen Partikelkonzentrationssensor 53 im Arbeitsraum 29. Weiter umfasst die Steuervorrichtung 31 einen ersten Regler 54, einen zweiten Regler 55, einen dritten Regler 56, einen vierten Regler 57, einen fünften Regler 58, einen sechsten Regler 59 und einen siebten Regler 60. Die vorbezeichneten Komponenten der Steuervorrichtung 31 sind über hier in der **Fig. 2** gezeigten, gestrichelt dargestellten und nicht näher bezeichneten Signalleitungen, miteinander verbunden.

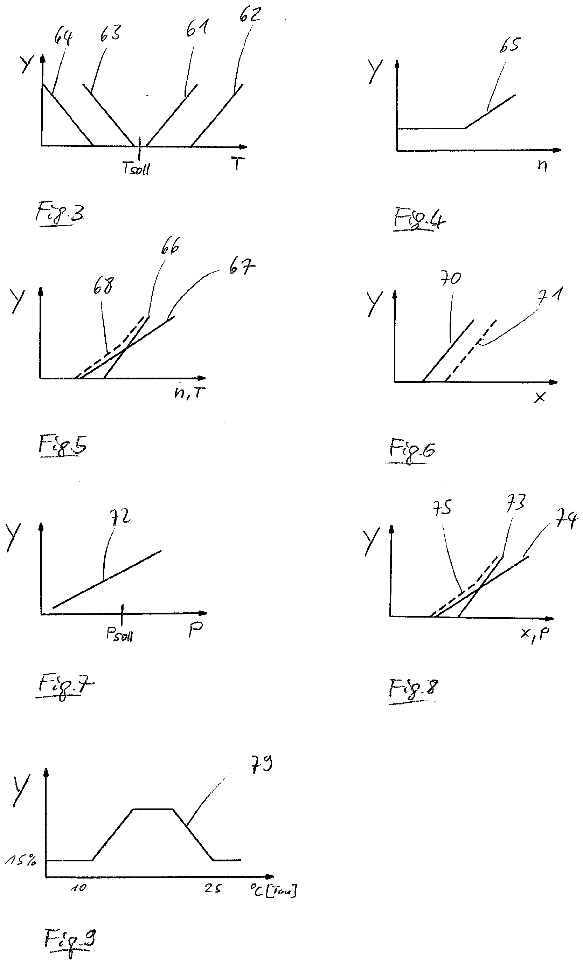

**Fig. 3** zeigt ein Regeldiagramm des ersten Reglers 54, wobei der erste Regler 54 ein Eingangssignal von dem ersten Lufttemperatursensor 49 und dem zweiten Lufttemperatursensor 50 erhält. In Abhängigkeit eines Soll-Wertes Tₛₒₗₗ der Lufttemperatur bewirkt ein Ist-Wert der Lufttemperatur eine Korrektur bzw. eine Anpassung des Ist-Wertes entsprechend einer Kennlinie 61 durch Kühlung mit dem Kühler 39, und bei einer weiter ansteigenden Lufttemperatur gemäß einer Kennlinie 62, durch eine Erhöhung der Luftwechselrate bzw. Signalweiterleitung an den dritten Regler 56. Bei einer Absenkung des Ist-Wertes der Lufttemperatur wird zunächst die Wärmerückgewinnungseinheit 43 über den siebten Regler 60 gemäß der Kennlinie 63 angesprochen und nachfolgend der Erhitzer 40 gemäß der Kennlinie 64. Die jeweils in den Diagrammen dargestellte Y-Achse betrifft eine Signalstärke der jeweiligen Regler 54 bis 60.

Nach **Fig. 4** erhält der zweite Regler 55 von dem Partikelkonzentrationssensor 53 ein Eingangssignal mit einer Partikelanzahl n. Entsprechend einer Kennlinie 65 des zweiten Reglers 55 wird ein Ausgangssignal ab einer festgelegten Partikelanzahl stetig erhöht.

Der dritte Regler 56 erhält nach **Fig. 5** von dem ersten Regler 54 ein Eingangssignal gemäß der Kennlinie 62 und von dem zweiten Regler 55 ein Eingangssignal gemäß der Kennlinie 65, nach denen ein Ausgangssignal des dritten Reglers 56 eine Größe einer Drehzahl des ersten Lüfters 38 regelt. Die Kennlinien 66 und 67 betreffen jeweils die Eingangssignale von dem ersten Regler 54 und dem zweiten Regler 55, wobei die Kennlinie 68 aus den beiden Kennlinien 66 und 67 resultiert und das Ausgangssignal des dritten Reglers 56 darstellt. Das Ausgangssignal wird an eine Antriebsregelung 69 des ersten Lüfters 38 weitergeleitet.

**Fig. 6** betrifft den vierten Regler 57, der ein Eingangssignal gemäß der Kennlinie 70 von dem dritten Regler 56 erhält. Der vierte Regler 57 erzeugt durch Subtraktion eine Kennlinie 71 mit einem Ausgangssignal, welches im Wesentlichen bei dem zweiten Lüfter 42 eine Drehzahl sicherstellen soll die in dem Arbeitsraum 29 eine Druckdifferenz bewirkt.

Die den fünften Regler 58 betreffende **Fig. 7** zeigt eine Kennlinie 72, die ein Ausgangssignal in Abhängigkeit eines Drucks bzw. Differenzdrucks in dem Arbeitsraum 29 bewirkt. Der fünfte Regler 58 erhält von dem Luftdifferenzdrucksensor 52 ein Eingangssignal bzw. einen Ist-Wert welches bzw. welcher bei einer Abweichung von einem Soll-Wert Pₛₒₗₗ ein schwächeres oder stärkeres Ausgangssignal erzeugt.

Der sechste Regler 59 erhält, wie in **Fig. 8** dargestellt, seinerseits das Ausgangssignal des vierten Reglers 57 und des fünften Reglers 58 gemäß der Kennlinien 73 und 74, wobei ein Ausgangssignal des sechsten Reglers 59 sich aus einer resultierenden Kennlinie 75 ergibt. Das Ausgangssignal wirkt auf eine Antriebsregelung 76 des zweiten Lüfters 42, so dass stets die erforderliche Druckdifferenz in dem Arbeitsraum, auch bei veränderter Luftwechselrate, aufrechterhalten bleibt.

Die **Fig. 9** betrifft den siebten Regler 60 der gemäß dem Eingangssignal von dem ersten Regler 54 und dem dritten Lufttemperatursensor 51 über einen Motor 77 eine Bypassklappe 78 nach der Kennlinie 79 öffnen oder schließen kann. Nach der Kennlinie 79 ist ein Mindestfrischluftanteil von 15 % vorgesehen.

## Patentansprüche

1. Verfahren zum Betrieb eines Reinraums (12, 28), wobei mittels einer Steuervorrichtung (16, 31) des Reinraums eine raumlufttechnische Anlage (15, 30) des Reinraums gesteuert und/oder geregelt wird, wobei mittels der raumlufttechnischen Anlage eine Luftwechselrate in einem Arbeitsraum (12, 13, 14, 29) des Reinraums und eine Druckdifferenz zwischen dem Arbeitsraum und einer Umgebung (25, 45) ausgebildet wird, wobei mit zumindest einer Sensoreinrichtung (19, 48) der Steuervorrichtung ein einen Betriebsparameter des Arbeitsraums repräsentierender Ist-Wert erfasst wird,
**dadurch gekennzeichnet,**
**dass** mittels der Sensoreinrichtung (19, 48) als ein Betriebsparameter ein Ist-Wert für Partikelkonzentration gemessen wird, wobei die Partikelkonzentration durch eine Änderung der Luftwechselrate beeinflusst wird, wobei mittels der Steuervorrichtung die Luftwechselrate derart angepasst wird, dass der Ist-Wert nach einem Soll-Wert für die Partikelkonzentration geregelt wird, wobei die Steuervorrichtung in Abhängigkeit einer Zeitsteuerung (22) oder einer Bewegungsintensität einen Soll-Wert für die Partikelkonzentration auswählt, wobei als Soll-Wert ein Soll-Aktivitätswert für einen Betriebszeitraum oder ein Soll-Inaktivitätswert für einen Ruhezeitraum ausgewählt wird, wobei in dem Ruhezeitraum gegenüber dem Betriebszeitraum die Partikelkonzentration erhöht wird.

2. Verfahren nach Anspruch 1,
**dadurch gekennzeichnet,**
**dass** als Druckdifferenz ein Überdruck in dem Arbeitsraum (12, 13, 14, 29) ausgebildet wird.

3. Verfahren nach Anspruch 1 oder 2,
**dadurch gekennzeichnet,**
**dass** mittels der Sensoreinrichtung (19, 48) die Druckdifferenz und ein eine Luftqualität im Arbeitsraum (12, 13, 14, 29) und einen Betriebsparameter des Arbeitsraums repräsentierender Ist-Wert erfasst wird.

4. Verfahren nach einem der vorangehenden Ansprüche,
**dadurch gekennzeichnet,**
**dass** mittels der Sensoreinrichtung (19, 48) ein Ist-Wert für Lufttemperatur, relative Luftfeuchte, Luftwechselrate, Luftdruck, Bewegungsintensität, Personenanzahl, CO2-Konzentration und/oder Türöffnung erfasst wird.

5. Verfahren nach einem der vorangehenden Ansprüche,
**dadurch gekennzeichnet,**
**dass** die Partikelkonzentration an einem Arbeitsplatz im Arbeitsraum (12, 13, 14, 29) oder in einer Abluft der raumlufttechnischen Anlage (15, 30) gemessen wird.

6. Verfahren nach einem der vorangehenden Ansprüche,
**dadurch gekennzeichnet,**
**dass** in dem Ruhezeitraum gegenüber dem Betriebszeitraum eine Temperatur erhöht oder abgesenkt wird.

7. Verfahren nach einem der Ansprüche 1 bis 5,
**dadurch gekennzeichnet,**
**dass** in dem Ruhezeitraum gegenüber dem Betriebszeitraum eine relative Luftfeuchte erhöht oder abgesenkt wird.

8. Verfahren nach einem der vorangehenden Ansprüche,
**dadurch gekennzeichnet,**
**dass** eine Regelung der Druckdifferenz von einer Regelung der Luftwechselrate überlagert wird.

9. Verfahren nach einem der vorangehenden Ansprüche,
**dadurch gekennzeichnet,**
**dass** die raumlufttechnische Anlage (15, 30) einen ersten Lüfter (38) für Zuluft und einen zweiten Lüfter (42) für Abluft aufweist, wobei die Steuervorrichtung (16, 31) die Druckdifferenz durch eine Anpassung von Drehzahlen der jeweiligen Lüfter regelt.

10. Verfahren nach Anspruch 9,
**dadurch gekennzeichnet,**
**dass** die Steuervorrichtung (16, 31) eine Drehzahl des ersten Lüfters (38) in Abhängigkeit der Partikelkonzentration und vorzugsweise zusätzlich in Abhängigkeit einer Lufttemperatur regelt.

11. Verfahren nach Anspruch 10,
**dadurch gekennzeichnet,**
**dass** die Sensoreinrichtung (19, 48) eine Lufttemperatur der Zuluft und eine Lufttemperatur der Abluft erfasst, wobei die Steuervorrichtung eine Drehzahl des ersten Lüfters (38) und/oder eine Behandlung der Zuluft in Abhängigkeit der Lufttemperatur der Abluft regelt.

12. Verfahren nach einem der Ansprüche 9 bis 11,
**dadurch gekennzeichnet,**
**dass** die Steuervorrichtung (16, 31) eine Drehzahl des zweiten Lüfters (42) in Abhängigkeit der Druckdifferenz, vorzugsweise eines Luftdrucks im Arbeitsraum (12, 13, 14, 29) und einer Drehzahl des ersten Lüfters (38) regelt.

13. Verfahren nach einem der vorangehenden Ansprüche,
**dadurch gekennzeichnet,**
**dass** die Steuervorrichtung (16, 31) über einen Betriebszeitraum erfasste Betriebsparameter speichert, und aus den gespeicherten Betriebsparametern regelmäßig wiederkehrende Abfolgen von Betriebszuständen ableitet, wobei die Steuervorrichtung eine Anpassung der Luftwechselrate auf einen zukünftig zu erwartenden Betriebszustand vornimmt.

14. Steuervorrichtung (16, 31) für einen Reinraum (12, 28), wobei der Reinraum einen Arbeitsraum (12, 13, 14, 29) und eine raumlufttechnische Anlage (15, 30) umfasst, wobei mittels der Steuervorrichtung die raumlufttechnischen Anlage steuerbar und/oder regelbar ist, wobei mittels der raumlufttechnischen Anlage eine Luftwechselrate in dem Arbeitsraum und eine Druckdifferenz zwischen dem Arbeitsraum und einer Umgebung (25, 45) ausbildbar ist, wobei die Steuervorrichtung zumindest eine Sensoreinrichtung (19, 48) zur Erfassung eines einen Betriebsparameter des Arbeitsraums repräsentierenden Ist-Wertes umfasst,
**dadurch gekennzeichnet,**
**dass** mittels der Sensoreinrichtung als ein Betriebsparameter ein Ist-Wert für Partikelkonzentration messbar ist, wobei die Partikelkonzentration durch eine Änderung der Luftwechselrate beeinflussbar ist, wobei mittels der Steuervorrichtung die Luftwechselrate derart anpassbar ist, dass der Ist-Wert nach einem Soll-Wert für die Partikelkonzentration regelbar ist, wobei mittels der Steuervorrichtung in Abhängigkeit einer Zeitsteuerung (22) oder einer Bewegungsintensität ein Soll-Wert für die Partikelkonzentration auswählbar ist, wobei als Soll-Wert ein Soll-Aktivitätswert für einen Betriebszeitraum oder ein Soll-Inaktivitätswert für einen Ruhezeitraum auswählbar ist, wobei in dem Ruhezeitraum gegenüber dem Betriebszeitraum die Partikelkonzentration erhöhbar ist.

15. Reinraum (12, 28) mit einem Arbeitsraum (12, 13, 14, 29), einer raumlufttechnischen Anlage (15, 30) und einer Steuervorrichtung (16, 31) nach Anspruch 14.

16. Reinraum nach Anspruch 15,
**dadurch gekennzeichnet,**
**dass** der Reinraum (12, 28) eine Mehrzahl von miteinander verbundenen Arbeitsräumen (12, 13, 14, 29) mit unterschiedlichen Druckdifferenzen umfasst.

## Claims

1. A process for operating a clean room (12, 28), a room ventilation system (15, 30) being controlled and/or regulated by means of a control device (16, 31) of the clean room, an air exchange rate in a work room (12, 13. 14, 29) of the clean room and a pressure difference between the work room and an environment (25, 45) being generated by means of the room ventilation system, an actual value representing an operating parameter of the work room being registered by means of at least one sensor device (19, 48) of the control device,
**characterized in that**
an actual value for a particle concentration is measured as an operating parameter by means of the sensor device (19, 48), the particle concentration being influenced by a change in the air exchange rate, the air exchange rate being adjusted by means of the control device in such a manner that the actual value is controlled in accordance with a target value for the particle concentration, the control device selecting a target value for the particle concentration as a function of a time control (22) or of an intensity of movement, a target activity value for an operating period or a target inactivity value for an inactivity period being selected as the target value, the particle concentration being increased during the inactivity period in comparison to the operating period.

2. The process according to claim 1,
**characterized in that**
a positive pressure is generated in the work room (12, 13, 14, 29) as a pressure difference.

3. The process according to claim 1 or 2,
**characterized in that**
the pressure difference and an actual value, which represents an operating parameter of the work room and an air quality in the work room (12, 13, 14, 29), are registered by means of the sensor device (19, 48).

4. The process according to any one of the preceding claims,
**characterized in that**
an actual value for air temperature, relative air humidity, air exchange rate, air pressure, intensity of movement, number of individuals, CO₂ concentration and/or door opening is registered by means of the sensor device (19, 48).

5. The process according to any one of the preceding claims,
**characterized in that**
the particle concentration is measured at a workplace in the work room (12, 13, 14, 29) or in an exhaust air of the room ventilation system (15, 30).

6. The process according to any one of the preceding claims,
**characterized in that** a temperature is increased or decreased during the inactivity period in comparison to the operating period.

7. The process according to any one of the claims 1 to 5,
**characterized in that**
a relative air humidity is increased or decreased during the inactivity period in comparison to the operating period.

8. The process according to any one of the preceding claims,
**characterized in that**
control of the pressure difference is superseded by control of the air exchange rate.

9. The process according to any one of the preceding claims,
**characterized in that**
the room ventilation system (15, 30) comprises a first ventilator (38) for supply air and a second ventilator (42) for exhaust air, the control device (16, 31) controlling the pressure difference by adjusting speeds of rotation of the respective ventilators.

10. The process according to claim 9,
**characterized in that**
the control device (16, 31) controls a speed of rotation of the first ventilator (38) as a function of the particle concentration and preferably additionally as a function of an air temperature.

11. The process according to claim 10,
c**haracterized** in that
the sensor device (19, 48) registers an air temperature of the supply air and an air temperature of the exhaust air, the control device controlling a speed of rotation of the first ventilator (38) and/or a treatment of the supply air as a function of the air temperature of the exhaust air.

12. The process according to any one of claims 9 to 11,
**characterized in that**
the control device (16, 31) controls a speed of rotation of the second ventilator (42) as a function of the pressure difference, preferably of an air pressure in the work room (12, 13, 14, 29) and of a speed of rotation of the first ventilator (38).

13. The process according to any one of the preceding claims,
**characterized in that**
the control device (16, 31) stores operating parameters that are registered during an operating period and derives regularly recurring sequences of operating conditions from the stored operating parameters, the control device adjusting the air exchange rate to an operating condition to be expected in the future.

14. A control device (16, 31) for a clean room (12, 28), the clean room comprising a work room (12, 13, 14, 29) and a room ventilation system (15, 30), the room ventilation system being able to be controlled and/or regulated by means of the control device, an air exchange rate in the work room and a pressure difference between the work room and an environment (25, 45) being able to be generated by means of the room ventilation system, the control device comprising at least one sensor device (19, 48) for registering an actual value representing an operating parameter of the work room,
**characterized in that**
an actual value for the particle concentration can be measured as an operating parameter by means of the sensor device, the particle concentration being able to be influenced by a change in the air exchange rate, the air exchange rate being able to be adjusted by means of the control device in such a manner that the actual value can be regulated in accordance with a target value for the particle concentration, a target value for the particle concentration being able to be chosen as a function of a time control (22) or an intensity of movement by means of the control device, a target activity value for an operating period or a target inactivity value for an inactivity period being able to be chosen as a target value, the particle concentration being able to be increased in the inactivity period in comparison to the operating period.

15. A clean room (12, 28) comprising a work room (12, 13, 14, 29), a room ventilation system (15, 30) and a control device (16, 31) according to claim 14.

16. The clean room according to claim 15,
**characterized in that**
the clean room (12, 28) comprises a plurality of interconnected work rooms (12, 13, 14, 29) having different pressure differences.

## Revendications

1. Procédé pour l'opération d'une salle blanche (12, 28), un système de ventilation des locaux (15, 30) étant contrôlé et/ou régulé au moyen d'un dispositif de contrôle (16, 31) de la salle blanche, un taux d'échange d'air dans un local de travail (12, 13. 14, 29) de la salle blanche et une différence de pression entre le local de travail et un environnement (25, 45) étant générés au moyen du système de ventilation des locaux, une valeur effective représentant un paramètre d'opération du local de travail étant enregistrée au moyen d'au moins un dispositif de capteur (19, 48) du dispositif de contrôle,
**caractérisé en ce qu'**
une valeur effective pour une concentration des particules est mesurée comme paramètre d'opération au moyen du dispositif de capteur (19, 48), la concentration des particules étant influencée par un changement du taux d'échange d'air, le taux d'échange d'air étant ajusté au moyen du dispositif de contrôle de telle manière que la valeur effective est contrôlée selon une valeur à atteindre pour la concentration des particules, le dispositif de contrôle choisissant une valeur à atteindre pour la concentration des particules sous forme d'une fonction d'un contrôle de temps (22) ou d'une intensité de mouvement, une valeur d'activité à atteindre pour une période d'opération ou une valeur d'inactivité à atteindre pour une période d'inactivité étant choisies comme valeur à atteindre, la concentration des particules étant élevée pendant la période d'inactivité par rapport à la période d'opération.

2. Procédé selon la revendication 1,
**caractérisé en ce qu'**
une pression positive est générée dans le local de travail (12, 13, 14, 29) comme différence de pression.

3. Procédé selon la revendication 1 ou 2,
**caractérisé en ce que**
la différence de pression et une valeur effective, qui représente un paramètre d'opération du local de travail et une qualité de l'air dans le local de travail (12, 13, 14, 29), sont enregistrées au moyen du dispositif de capteur (19, 48).

4. Procédé selon l'une quelconque des revendications précédentes,
**caractérisé en ce qu'**
une valeur effective pour la température de l'air, l'humidité de l'air relative, le taux d'échange d'air, la pression de l'air, l'intensité de mouvement, le nombre de personnes, la concentration de CO₂ et/ou une baie de porte est enregistrée au moyen du dispositif de capteur (19, 48).

5. Procédé selon l'une quelconque des revendications précédentes,
**caractérisé en ce que**
la concentration des particules est mesurée à un lieu de travail dans le local de travail (12, 13, 14, 29) ou dans un air évacué du système de ventilation des locaux (15, 30).

6. Procédé selon l'une quelconque des revendications précédentes,
**caractérisé en ce qu'**
une température est élevée ou abaissée pendant la période d'inactivité par rapport à la période d'opération.

7. Procédé selon l'une quelconque des revendications 1 à 5,
**caractérisé en ce qu'**
une humidité de l'air relative est élevée ou abaissée pendant la période d'inactivité par rapport à la période d'opération.

8. Procédé selon l'une quelconque des revendications précédentes,
**caractérisé en ce que**
un contrôle de la différence de pression est superposé par un contrôle du taux d'échange d'air.

9. Procédé selon l'une quelconque des revendications précédentes,
**caractérisé en ce que**
le système de ventilation des locaux (15, 30) comprend un premier ventilateur (38) pour l'air entrant et un deuxième ventilateur (42) pour l'air évacué, le dispositif de contrôle (16, 31) contrôlant la différence de pression en ajustant les vitesses de rotation des ventilateurs correspondants.

10. Procédé selon la revendication 9,
**caractérisé en ce que**
le dispositif de contrôle (16, 31) contrôle une vitesse de rotation du premier ventilateur (38) sous forme d'une fonction de la concentration des particules et préférablement en outre sous forme d'une fonction d'une température de l'air.

11. Procédé selon la revendication 10,
**caractérisé en ce que**
le dispositif de capteur (19, 48) enregistre une température de l'air dudit air entrant et une température de l'air dudit air évacué, le dispositif de contrôle contrôlant une vitesse de rotation du premier ventilateur (38) et/ou un traitement de l'air entrant sous forme d'une fonction de la température de l'air dudit air évacué.

12. Procédé selon l'une quelconque des revendications 9 à 11,
**caractérisé en ce que**
le dispositif de contrôle (16, 31) contrôle une vitesse de rotation du deuxième ventilateur (42) sous forme d'une fonction de la différence de pression, préférablement d'une pression de l'air dans le local de travail (12, 13, 14, 29) et de la vitesse de rotation du premier ventilateur (38).

13. Procédé selon l'une quelconque des revendications précédentes,
**caractérisé en ce que**
le dispositif de contrôle (16, 31) stocke des paramètres d'opération, qui sont enregistrés pendant une période d'opération, et dérive des séquences se répétant régulièrement des conditions d'opération à partir de paramètres d'opération, le dispositif de contrôle ajustant le taux d'échange d'air à une condition d'opération à être attendue dans l'avenir.

14. Dispositif de contrôle (16, 31) pour une salle blanche (12, 28), la salle blanche comprenant un local de travail (12, 13, 14, 29) et un système de ventilation des locaux (15, 30), le système de ventilation des locaux pouvant être contrôlé et/ou régulé au moyen du dispositif de contrôle, un taux d'échange d'air dans le local de travail et une différence de pression entre le local de travail et un environnement (25, 45) pouvant être générés au moyen du système de ventilation des locaux, le dispositif de contrôle comprenant au moins un dispositif de capteur (19, 48) pour enregistrer une valeur effective représentant un paramètre d'opération du local de travail,
**caractérisé en ce qu'**
une valeur effective pour la concentration des particules peut être mesurée comme paramètre d'opération au moyen du dispositif de capteur, la concentration des particules pouvant être influencée par un changement du taux d'échange d'air, le taux d'échange d'air pouvant être ajusté au moyen du dispositif de contrôle de telle manière que la valeur effective peut être régulée selon l'une valeur à atteindre pour la concentration des particules, une valeur à atteindre pour la concentration des particules pouvant être choisie sous forme d'une fonction d'un contrôle de temps (22) ou d'une intensité de mouvement au moyen du dispositif de contrôle, une valeur d'activité à atteindre pour une période d'opération ou une valeur d'inactivité à atteindre pour une période d'inactivité pouvant être choisies comme valeur à atteindre, la concentration des particules pouvant être élevée pendant la période d'inactivité par rapport à la période d'opération.

15. Salle blanche (12, 28) comprenant un local de travail (12, 13, 14, 29), un système de ventilation des locaux (15, 30) et un dispositif de contrôle (16, 31) selon la revendication 14.

16. Salle blanche selon la revendication 15,
**caractérisé en ce que**
la salle blanche (12, 28) comprenant une pluralité des locaux de travail (12, 13, 14, 29) interconnectés ayant des différences de pression différentes.
